(19) Europäisches Patentamt
European Patent Office
Office européen des brevets

(11) EP 2 586 296 A1

(12) # EUROPEAN PATENT APPLICATION
published in accordance with Art. 153(4) EPC

(43) Date of publication:
**01.05.2013 Bulletin 2013/18**

(21) Application number: **11798259.5**

(22) Date of filing: **24.06.2011**

(51) Int Cl.:
***A01K 1/015*** *(2006.01)* ***A01K 1/01*** *(2006.01)*
***A01K 23/00*** *(2006.01)*

(86) International application number:
**PCT/JP2011/064547**

(87) International publication number:
**WO 2011/162378 (29.12.2011 Gazette 2011/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2010 JP 2010145697**

(71) Applicant: **Unicharm Corporation**
**Ehime 799-0111 (JP)**

(72) Inventors:
- **MATSUO, Takayuki**
  **Kanonji-shi**
  **Kagawa 769-1602 (JP)**
- **HIRAO, Tomoko**
  **Kanonji-shi**
  **Kagawa 769-1602 (JP)**

(74) Representative: **Vaughan, Jennifer Ann**
**Saunders & Dolleymore LLP**
**9 Rickmansworth Road**
**GB-Watford, Herts. WD18 0JU (GB)**

(54) **LIQUID-PERMEABLE PANEL AND SYSTEM TOILET FOR ANIMALS USING SAME**

(57) Disclosed is a disposable liquid-permeable panel that is for a toilet system for animals that, without using a particulate, resists foot wetting when the animal performs excretion and can suppress the incidence of odors even if excrement is present for a long period of time. The liquid-permeable panel (3) used in the toilet system (1) for animals is water-absorbent, liquid-permeable, and disposable, and is configured from paper containing aluminum sulfate. Preferably, the paper is acidic paper containing a sizing agent and aluminum sulfate. More preferably, the liquid-permeable panel (3) has a plurality of holes (31) that penetrate in the direction of thickness and is a corrugated cardboard wherein liquids go through the plurality of holes (31), passing through in the direction of thickness of the liquid-permeable panel. Excrement odor suppression is achieved by means of the chemical deodorizing ability that aluminum sulfate has.

FIG. 2

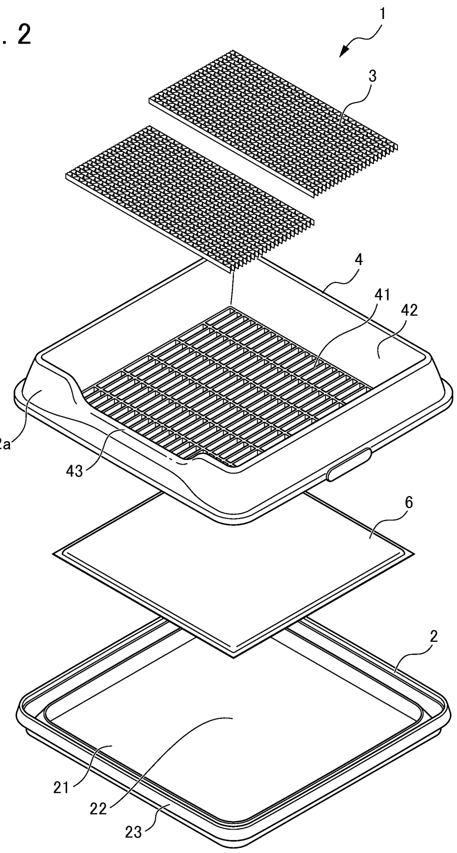


EP 2 586 296 A1

**Description**

TECHNICAL FIELD

The present invention relates to a disposable liquid-permeable panel used, for example, in a toilet system for animals such as a dog.

BACKGROUND ART

A toilet for animals which can be disposed in a room is used in order to manage excrement of an animal that inhabits the room. Such a toilet for animals includes an animal toilet in which a commercially available pee pad for toilet use is laid directly onto the floor surface, or is fixed by an outer frame by pressing the outer periphery of the pee pad, and an animal toilet in which a shallow toilet pan contains a plate-shaped urine-absorbent mat and a liquid-permeable non-woven fabric that is tightly attached to and covers the whole upper surface of the urine-absorbent mat. Animals perform excretion by directly mounting onto the pee pad or the non-woven fabric when using these animal toilets. Consequently, when animals move on the pee pad or the non-woven fabric after excretion, the feet of the animal stand upon the excretion stain and therefore the feet are wetted by excreted urine. When the feet become wetted in this manner, the floor surface of the room becomes soiled with urine by movement of the animal in the room after excretion, and therefore there is a strong need for an animal toilet that suppresses feet wetting.

Furthermore, the pee pad or the non-woven fabric in the animal toilet is not exchanged after each excretion event and is used continuously for a predetermined period. As a result, there is a demand for a deodorizing function that suppresses odors resulting from the presence of excrement.

As a toilet for animals for indoor use that includes a deodorizing function, for example, a toilet for animals in which particles each having a diameter of 4 to 10 mm and including both deodorizing characteristics and water-absorbent characteristics such as silica gel are spread in a toilet receptacle is proposed (reference is made to Patent Document 1).

The animal toilet disclosed in Patent Document 1 provides a simultaneous solution to the incidence of odors and feet wetting. However, when the animal toilet disclosed in Patent Document 1 is applied to a dog, difficulties are associated with the application of the animal toilet to a dog due to the risk that the dog may eat the particulate in error or cause flight of the particulate due to a vigorous digging motion.

Patent Document 1: Japanese Unexamined Patent Application, Publication No. 2005-21071

DISCLOSURE OF THE INVENTION

Problems to be Solved by the Invention

Therefore the present invention has the object of providing a disposable liquid-permeable panel for use in a toilet system for animals that suppresses wetting of the feet during excretion by an animal without the use of particles, and that suppresses the incidence of odors even when excrement is present for a long period of time, and of providing a toilet system for animals that includes a liquid-permeable panel.

Means for Solving the Problems

The present inventors conducted diligent research into solving the above problems. As a result, the above problems were solved and the invention was completed with the insight that the effect of wetting of the feet can be suppressed and odor caused by excrement can be suppressed by use of a disposable liquid-permeable panel that exhibits predetermined water-absorbent and predetermined liquid-permeable characteristics and by configuring the material used in the liquid-permeable panel as paper containing aluminum sulfate. The invention has the following features specifically.

(1) A disposable liquid-permeable panel for a toilet for animals having water-absorbent characteristics and liquid-permeable characteristics includes paper including aluminum sulfate.
(2) The liquid-permeable panel as described in (1), the paper is acidic paper containing a sizing agent and aluminum sulfate.
(3) The liquid-permeable panel as described in (1) or (2), the liquid-permeable panel has a plurality of holes that penetrate in a thickness direction of the liquid-permeable panel, and is a corrugated cardboard in which liquids go through the plurality of holes, passing through the thickness direction of the liquid-permeable panel.
(4) The liquid-permeable panel as described in any one of (1) to (3), a content amount of aluminum sulfate in the

liquid-permeable panel as aluminum-sulfate is at least 0.05 wt% and no greater than 0.3 wt%.

(5) A toilet system for animals includes: an excrement receptacle that includes an excretion containment section; and the liquid-permeable panel as described in any one of (1) to (4) that is disposed detachably in an upper space of the excretion containment section.

Effects of the Invention

The present invention provides a disposable liquid-permeable panel for a toilet system for animals that suppresses wetting of the feet during excretion by an animal without the use of particles, and that suppresses the incidence of odors even when excrement is present for a long period of time. As a result, even when the toilet system for animals according to the present invention is applied to a dog, the toilet system for animals can be suitably applied to the dog since the dog does not eat the particles in error or cause flight of the particles due to a vigorous digging motion.

BRIEF DESCRIPTION OF THE DRAWINGS

FIG. 1 is a perspective view of a toilet system for animals according to the present embodiment;

FIG. 2 is an exploded perspective view illustrating the toilet system for animals according to the present embodiment;

FIG. 3 is a plan view with the liquid-permeable panel removed in the toilet system for animals according to the present embodiment;

FIG. 4 is a sectional view of a toilet system 1 for animals along the line A-A in FIG. 1 of the toilet system for animals according to the present embodiment;

FIG. 5 is an upper view of a liquid-permeable panel used in the toilet system for animals according to the present embodiment; and

FIG. 6 is a sectional view of the liquid-permeable panel 3 along the line B-B in FIG. 5 of the liquid-permeable panel used in the toilet system for animals according to the present embodiment.

PREFERRED MODE FOR CARRYING OUT THE INVENTION

The preferred aspects of the present invention will be described below with reference to the figures. The embodiments of the present invention are not limited in any manner to the following embodiments, nor is the technical scope of the present invention limited thereby.

Overall Structure

Firstly the overall structure of a toilet system 1 for animals will be described with reference to the toilet system 1 for animals that is an embodiment of the present invention.

As illustrated in FIG. 1 and FIG. 2, the toilet system 1 for animals according to the present embodiment includes an excrement receptacle 2 that opens at a upper surface, an upper receptacle 4 that is disposed on an upper section of the excrement receptacle 2, and a liquid-permeable panel 3 disposed (mounted) on the bottom surface section 41 of the upper receptacle 4. The excrement receptacle 2 includes an excrement containment section 21 that is configured to contain a liquid-absorbent member such as a liquid-absorbent sheet 6 that exhibits water-absorbent characteristics. The upper receptacle 4 includes a bottom surface that covers the open upper surface of the excrement receptacle 2.

As illustrated in FIG. 2, the excrement receptacle 2 includes a substantially square bottom surface section 22 and four side wall sections 23 that rise from the four sides of the bottom surface section with a predetermined rise angle with respect to the bottom surface section 22. The excrement containment section 21 is formed by the space enclosed by the bottom surface section 22 and the four side wall sections 23. The excrement containment section 21 can contain urine or the like that is excreted by an animal.

As illustrated in FIG. 2 and FIG. 3, the upper receptacle 4 is configured with an open upper surface. The upper receptacle 4 includes a support section 41 configured with a substantially square bottom surface when viewed in plan, and four upper side wall sections 42 that rise with a predetermined rise angle with respect to the support section 41 respectively from the four sides of the support section 41.

As illustrated in FIG. 3, the support section 41 has a lattice-shaped configuration that includes a plurality of through holes 441, and exhibits permeable characteristics in relation to a liquid such as urine. The plurality of through holes 441 is configured in a rectangular shape, and is disposed respectively with a predetermined interval in relation to the directions of the rows and columns.

The dimensions of the plurality of through holes 441 preferably are a length on one side of 1 mm to 100 mm

and more preferably 10 mm to 60 mm in light of maintaining suitable liquid-permeable characteristics.

The width W1 of the lattice-shaped section in the support section 41 (as illustrated in FIG. 3) is preferably 1 mm to 10 mm, and more preferably 2 mm to 6 mm in order to maintain suitable liquid permeable characteristics and maintain the strength of the support section 41.

The thickness D1 of the support section 41 (illustrated in FIG. 4) is preferably 1 mm to 10 mm in order to maintain the strength of the support section 41.

The height of three upper side wall sections 42 of the four upper side wall sections 42 is configured to be substantially equal. A gateway part 43 is formed on one of the upper side wall sections 42a of the four upper side wall sections 42 and is configured with a height that is less than the height of the other three upper side wall sections 42. An animal that uses the toilet system 1 for animals may enter and leave the upper receptacle 4 from the gateway part 43.

The excrement receptacle 2 and the upper receptacle 4 may be configured by use of various materials such as woods, metals, or plastics. Of such materials, the use of a plastic is preferred in light of the problem of the production of an offensive smell resulting from seepage of excrement into the inner portion of the material, or the problem of corrosion caused by excrement. The plastic may include a material such as polyethylene, polypropylene, vinyl chloride resin, polystyrene, an ABS resin, an AS resin, polyester resin (polyethylene terephthalate or the like), a polyamide resin, and a polycarbonate resin or the like.

As illustrated in FIG. 1 and FIG. 2, the liquid-permeable panel 3 is disposed on the upper surface side of the support section 41 of the upper receptacle 4 and covers substantially the whole region on the upper surface of the support section 41. In the present embodiment, the liquid-permeable panel 3 is formed in an elongated shape that is approximately half of the size of the support section 41, and the upper surface of the support section 41 is covered with two liquid-permeable panels 3. The longitudinal direction of the liquid-permeable panel 3 is disposed along the direction of extension of the upper side wall section 42a forming the gateway part 43 of the upper receptacle 4.

The liquid-permeable panel 3 described above includes predetermined liquid-permeable characteristics, water-absorbent characteristics, and deodorizing characteristics. The details of the liquid-permeable panel 3 will be described below.

As illustrated in FIG. 2 and FIG. 4, the toilet system 1 for animals as described above disposes the upper receptacle 4 on an upper section of the excrement receptacle 2 in a state in which the liquid-absorbent sheet 6 is contained in the excrement containment section 21, and is used by mounting the liquid-permeable panel 3 on the support section 41 of the upper receptacle 4.

As illustrated in FIG. 4, in this state, the support section 41 is disposed between the excrement containment section 21 and the liquid-permeable panel 3, and therefore a predetermined space 5 is formed between the excrement containment section 21 and the liquid-permeable panel 3.

The excrement containment section 21 in the excrement receptacle 2 may include a retractable tray that is horizontally insertable or retractable in the bottom section of the excrement receptacle 2. The retractable tray in this configuration is used either by containing excrement, or is used with the liquid-absorbent sheet 6 laid in an inner section of the retractable tray. Cleaning of the excrement containment section 21 is extremely easy due to provision of the retractable tray. It is preferred to provide a handle to facilitate removal of the retractable tray from the excrement receptacle 2. There is no particular limitation on the shape of the handle as long as the retractable tray can be gripped.

There is no particular limitation in relation to the shape of the opening on the upper section of the excrement receptacle 2, and selection is possible from a variety of shapes including square, rectangular, trapezoid, oval, circular, or semicircular shapes. The shape of the opening on the upper section of the excrement receptacle 2 is preferably square or rectangular to thereby avoid waste of material when cutting and processing the liquid-permeable panel 3 from a large water-absorbent panel.

Disposable Liquid-Permeable Panel

Next, the disposable liquid-permeable panel 3 will be described. As illustrated in FIG. 1 and FIG. 2, the liquid-permeable panel 3 has an overall shape of a flat panel, and is configured to be detachable with respect to the upper receptacle 4 to thereby cover substantially the whole surface of the open section of the excrement receptacle 2. More specifically, as illustrated in FIG. 5, the liquid-permeable panel 3 is configured so that a corrugated sheet 32 and a flat sheet 33 as described below are formed and bonded at predetermined positions. The liquid-permeable panel 3 is a porous panel that includes a wall section that is continuously formed by the corrugated sheet 32 and the flat sheet 33 and extends in the direction of thickness of the liquid-permeable panel 3, and a plurality of holes 31 that is formed by spaces enclosed by the wall section to thereby penetrate in the direction of thickness.

The material used to configure the liquid-permeable panel 3 employs the materials having superior permeation of excrement, predetermined water-absorbent characteristics and deodorizing characteristics. A specific example of a material that has water-absorbent characteristics is paper formed from pulp or the like, and that contains a deodorizing agent such as aluminum sulfate (also termed "band sulfate" in the Japanese language). Aluminum sulfate ($2Al(SO_4)_3$)

produces aluminum hydroxide and sulfate (sulfate ions) upon reaction with water.

$$2\ Al(SO_4)_3 \rightarrow 2\ Al^{3+} + 3\ SO_4^{2-}$$

$$+)\qquad 6\ H_2O \rightarrow 6\ H^+ + 6\ OH^-$$

$$2\ Al\ (OH)_3 + 6\ H^+ + 3\ SO_4^{2-}$$

The sulfate ($H_2SO_4$) enables deodorization due to the chemical reaction below with typical components of an odor that is produced by urine such as ammonia or trimethylamine as described below.

(1) Reaction with Ammonia

$$H_2SO_4+2NH_3 \rightarrow (NH_4)_2\ SO_4$$

(2) Reaction with Trimethylamine

$$H_2SO_1+ (CH_3)\ N \rightarrow [[CH_3)_3NH]_2SO_1$$

In the present embodiment, the paper that configures the liquid-permeable panel 3 is preferably acidic paper containing a sizing agent and aluminum sulfate. The sizing agent is a hydrophobic agent that imparts water resistance or a stain resistant effect. More specifically, rosin (pine resin) and the like is used. Aluminum sulfate is commonly used to fix the sizing agent to paper. In this manner, since the pH is reduced as a result of production of a sulfate due to the reaction of aluminum sulfate with water, a paper that contains a sizing agent and aluminum sulfate is generally termed an acidic paper.

In the present embodiment, the acidic paper includes a sizing agent exhibiting hydrophobic water repellent characteristics and aluminum sulfate as a deodorizing agent. Consequently, the sizing agent imparts predetermined liquid-permeable and water-absorbent characteristics and imparts a deodorizing effect due to the aluminum sulfate and thereby enables suitable application to the liquid-permeable panel according to the present embodiment. That is to say, there is no precedent as a method of use of conventional acidic paper for the present embodiment which applies the hydrophobic characteristics of a conventional sizing agent in a configuration of predetermined liquid-permeable and liquid-absorbent characteristics, and furthermore that uses aluminum sulfate which is conventionally used as a fixing agent in a configuration of a deodorizing agent to thereby impart liquid-permeable, water-absorbent and deodorizing characteristics which are all required features for use as a toilet system for animals.

Acidic paper has the disadvantage of progressive deterioration over time of the paper due to acid, and there is an ongoing trend to switch to neutral paper in various usages. However, the liquid-permeable panel of the present embodiment is applied to a toilet for animals. Since the liquid-permeable panel is disposable type in short time use, the problem of deterioration over time does not arise. Therefore, in this sense, a new field of application has been successfully provided in relation to a liquid-permeable panel as a method of use that does not require consideration of the conventional disadvantages of acidic paper.

The content amount of aluminum sulfate in the liquid-permeable panel 3 is, calculated as aluminum-sulfate, preferably at least 0.05 wt% (500 ppm) and no greater than 0.3 wt% (3000 ppm). The deodorizing effect is weak when the content amount of aluminum sulfate is less than 0.05 wt% (500 ppm) and the fixing effect of the sizing agent is also weak, and therefore it is not preferred. The deodorizing effect is sufficiently maintained when at the upper limit of the content amount of aluminum sulfate of 0.3 wt% (3000 ppm) and, even when that limit is exceeded, a deodorizing effect proportional to the amount is not observed, and therefore is not preferred.

As illustrated in FIG. 5, it is preferred that the liquid-permeable panel 3 has a plurality of holes 31 that penetrate in the thickness direction of the liquid-permeable panel, and is a corrugated cardboard wherein liquids go through the plurality of holes, passing through in the direction of thickness of the liquid-permeable panel. Corrugated cardboard effectively deodorizes by promoting a reaction between an odor component and aluminum sulfate contained in a surface area that is expanded by the core and the liner of the corrugated cardboard configuring the wall surface of the respective

holes 31.

The main odor components are produced by excrement that is absorbed by the liquid-absorbent sheet 6, and when those components pass through the plurality of holes 31 that is disposed on substantially the whole surface of the liquid-permeable panel, the components are mainly deodorized due to a chemical reaction on the plurality of wall faces of the holes 31. Consequently, it is preferred that the liquid-permeable panel 3 has a plurality of holes 31 that penetrate in the thickness direction. Since the liquid-permeable panel 3 is water-absorbent, although a portion of the odor components remains attached to the liquid-permeable panel 3, in that case, since a reaction rapidly occurs with the sulfate originating in the aluminum sulfate, a superior deodorizing effect is imparted.

The application of aluminum sulfate to the entire liquid-permeable panel 3 that covers substantially the whole surface of the upper space of the excrement receptacle 2 enables effective removal of both the odor components produced by the liquid-permeable panel 3 itself and the odor components produced by the excrement absorbed in the liquid-absorbent sheet 6. As a result, a considerable suppression in relation to an odor from the excrement receptacle 2 is enabled.

Although the thickness of the liquid-permeable panel 3 differs in response to the configuration of the panel, typically the thickness is configured as 3 mm to 25 mm, preferably 3 mm to 10 mm, and more preferably 3 mm to 7 mm. When the thickness of the liquid-permeable panel 3 is excessively small, passage of excrement into the excrement containment section 21 is prevented by deformation of the panel, and there is a risk that the panel may be ruptured by the weight of the animal. When the thickness of the liquid-permeable panel 3 is excessively large, the absorption amount of excrement of the liquid-permeable panel 3 from a single excretion is increased and thereby shortens the exchange cycle and bulkiness must be considered when storing the panel for use in exchange operations.

The liquid-permeable panel 3 preferably includes a plurality of holes 31 that penetrates in the direction of thickness and enables passage of excrement through the plurality of holes 31 in the direction of thickness of the liquid-permeable panel 3. The shape and the surface area of the openings of the plurality of holes 31 may be the same or different. In comparison to a panel that is provided with holes that extend in an irregular direction such as a sponge material, the liquid-permeable panel 3 that includes the plurality of holes 31 facilitates a reduction in the amount of residual excrement in the inner portion of the disposable liquid-permeable panel 3 and suppresses wetting of the animal feet due to the animal standing on the liquid-permeable panel 3.

When the liquid-permeable panel 3 includes a plurality of holes 31 that penetrate in the thickness direction of the liquid-permeable panel 3, the average surface area of the openings of the plurality of holes 31 is preferably 10 $mm^2$/hole to 100 $mm^2$/hole, and more preferably 15 $mm^2$/hole to 60 $mm^2$/hole. When the average surface area of the openings of the plurality of holes 31 is excessively small, the amount of excrement that attaches to the disposable liquid-permeable panel 3 increases and suppression of wetting of the feet of the animal becomes difficult. An excessively large average surface area of the openings of the plurality of holes 31 is not preferred since there is a need to increase the thickness of the liquid-permeable panel 3 to impart sufficient strength to the liquid-permeable panel 3. There is no particular limitation in relation to the measurement method of the average surface area of the openings of the plurality of holes 31, and various methods may be used. For example, measurement can be performed using a method of image analysis of a photograph of the openings.

A liquid-permeable panel 3 with a corrugated honeycomb structure is preferred in light of facilitating manufacture and cost-effective acquisition. The corrugated honeycomb structure imparts the liquid-permeable panel 3 with a plurality of holes 31 that penetrate in the thickness direction.

The liquid-permeable panel 3 having a corrugated honeycomb structure will be described below in detail making reference to FIG. 5 and FIG. 6. FIG. 6 is a schematic sectional view of the liquid-permeable panel 3 along the line B-B in FIG. 5. Firstly, the corrugated sheet 32 and the flat sheet 33 are bonded to thereby manufacture a liquid-permeable panel 3 having a corrugated honeycomb structure. The corrugations of the corrugated sheet 32 are imparted to a material by use of a machine termed a corrugator. There is no particular limitation on the method of bonding the corrugated sheet 32 and the flat sheet 33, and suitable selection may be made from various bonding methods such as a bonding method that uses an adhesive agent. However a resin-based adhesive agent with strong water resistance is preferred.

The aluminum sulfate and the sizing agent used in the present embodiment are preferably included in the paper making step of the respective base paper. However there is no limitation in this regard, and application by coating or the like after paper making is possible.

Next, a member is formed by bonding the corrugated sheet 32 and the flat sheet 33, and is adhered in a plurality of laminated layers. It is preferred that this configuration also uses adhesion with a resin-based adhesive agent with strong water resistance. In this manner, a block is obtained by laminating the member obtained by bonding the corrugated sheet 32 and the flat sheet 33, and the block is cut to a suitable size in a direction that is parallel to the direction of penetration of the holes 31. The liquid-permeable panel 3 having a corrugated honeycomb structure is completed by slicing in a suitable thickness that is perpendicular to the direction of penetration of the holes 31. The completed liquid-permeable panel 3 having a corrugated honeycomb structure includes holes 31 enclosed by the corrugated sheet 32 and the flat sheet 33.

Deodorizing Characteristics of Liquid-Permeable Panel

It is preferred that the deodorizing characteristics of the liquid-permeable panel 3 exhibit a residual ammonia concentration after 20 minutes, when measured using the method described in the examples below, of no greater than $5.0 \times 10^{-4}$ volume % (5 ppm) and more preferably no greater than $1.0 \times 10^{-4}$ volume % (1 ppm). The use of a disposable liquid-permeable panel 3 that has deodorizing capacity enables the effect of suppressing an odor originating in the excrement containment section 21 in the toilet system for animals.

Liquid Permeation Rate and Water-Permeation Characteristics of Liquid-Permeable Panel

The liquid permeation rate of the liquid-permeable panel 3 is preferably at least 90% and still more preferably at least 93%. Use of the disposable liquid-permeable panel 3 having the above liquid permeation rate enables a reduction in the attachment of urine to the liquid-permeable panel 3 after excretion and inhibits wetting of the feet of the animal due to standing or dispersion of urine in the inner section of the panel. The liquid permeation rate of the liquid-permeable panel 3 may be measured by the following method in the examples described later.

The liquid-permeable panel 3 has water-absorbent characteristics of 10 to 50 %/min and more preferably 15 to 40 %/min. The use of the liquid-permeable panel 3 having water-absorbent characteristics enables the absorption by the liquid-permeable panel 3 of the small amount of attached excrement after passage of the majority of the excrement and therefore suppresses wetting of the feet of the animal. When the water-absorbent characteristics of the liquid-permeable panel 3 are excessively strong, a large amount of the excrement is absorbed by the liquid-permeable panel 3 during passage of the excrement, and the feet tend to become wetted by seepage of excrement caused by the animal standing at the position of excretion. When the water-absorbent characteristics of the liquid-permeable panel 3 are excessively low, residual attached excrement is present on the liquid-permeable panel 3 in a liquid state and there is a tendency for the feet to become wetted. The water-absorbent characteristics of the liquid-permeable panel 3 can be measured using the method described in the examples later.

The configuration of the liquid-permeable panel 3 used in the toilet system for animals enables deodorizing of an odor or the like by the liquid-permeable panel 3. Consequently, even when the liquid-absorbent sheet 6 such as a pee pad or the like is used continuously over a considerable period of time, an odor does not spread within the room and appropriate and continuous use of the toilet system 1 for animals is possible.

Furthermore, the majority of the excrement can pass through the liquid-permeable panel 3 to the excrement containment section 21, and a small amount of excrement attached to the liquid-permeable panel 3 is absorbed. Therefore, wetting of the feet by excrement can be conspicuously suppressed. The liquid-permeable panel 3 preferably prevents wetting of the portion with which the bottom of the feet of the animal makes contact. According to the present embodiment, since most of the excrement passes through the liquid-permeable panel 3 and most of the excrement remaining on the liquid-permeable panel 3 is absorbed by the liquid-permeable panel 3, repeated excretion is possible at the same position. Therefore, since the liquid-permeable panel 3 is configured detachably with respect to the upper receptacle 4, even when soiled by absorption of urine or blockage with feces, simple exchange is possible, and cleaning operations of the toilet system 1 for animals are extremely easy.

The toilet system 1 for animals includes the liquid-permeable panel 3 without use of particles, and the liquid-permeable panel 3 is configured continuously by alternate bonding of the corrugated sheet 32 and the flat sheet 33. In this manner, even when the toilet system 1 for animals is applied to a dog, the toilet system for animals can be suitably applied to the dog since the dog does not eat the particles in error or cause flight of the particles due to a vigorous digging motion. When an animal uses the toilet system 1 for animals, since the liquid-permeable panel 3 is not dispersed like fine particles, the perimeter of the toilet system 1 for animals can be maintained in a hygienic state.

Furthermore a space 5 is formed between the liquid-permeable panel 3 and the excrement containment section 21. Consequently, even when a large amount of urine discharge is present, the urine passes through the holes 31 in the liquid-permeable panel 3, disperses on the rear surface, and then is absorbed by the liquid-absorbent sheet 6. In other words, by the space 5, backflow of the urine and overflow of the holes causing residual urine on the surface of the liquid-permeable panel 3 can be effectively prevented. In this manner, wetting of the feet of the animal can be suppressed.

The toilet system 1 for animals according to the present invention is not limited to the above embodiments, and suitable modifications may be implemented to a degree that does not depart from the spirit of the invention. For example, a hood of a desired shape may be provided on the upper section of the excrement receptacle 2 in the toilet system for animals according to the above embodiment. The provision of the hood prevents soiling to the circumference of the toilet system 1 for animals resulting from fly of excrement on the surface of the liquid-permeable panel 3.

The corrugated sheet 32 in the liquid-permeable panel 3 of the toilet system 1 for animals according to the present embodiment is configured as a curved sheet. However the corrugated sheet 32 may be configured as a sheet that is folded in a zigzag configuration. The shape of the opening of the holes 31 is not limited to the above, and for example, may be hexagonal or circular. An arbitrary shape may be suitably selected as long as the dimensions of the

opening fall within the predetermined range described above and the holes penetrate in the thickness direction.

In substitution for the lattice-shaped porous plate that configures the support section 41 of the toilet system 1 for animals according to the present embodiment, a punching plate provided with regular circular openings, a porous plate provided with a plurality of parallel slits, or a reticulated plate may be used.

The toilet system 1 for animals according to the present invention may be used as a toilet for animals that are kept as pets such as dogs, cats or rabbits, and in particular is suitably used as a toilet for a dog that is kept indoors.

EXAMPLES

Although the present invention is described in detail hereafter making reference to the examples, the present invention is not thereby limited to the examples.

Example 1, Comparative Example 1

In accordance with the method described below, ammonia gas absorption experiments were conducted as a deodorization characteristics experiment as described hereafter in relation to a liquid-permeable panel material formed from acidic paper including aluminum sulfate and a liquid-permeable panel material formed from neutral paper not including aluminum sulfate. The experimental results are shown in Table 1.

Liquid-Permeable Panel Material

Paper-based liquid-permeable panel (Example 1): ONBS water-resistant base paper commercially available from Oji Itagami Co., Ltd. (basis weight 180 g/$m^2$) was used as the corrugated sheet 32, ONBS water-resistant base paper commercially available from Oji Itagami Co., Ltd. (basis weight 120 g/$m^2$) was used as the flat sheet 33, and an A-flute cardboard including aluminum sulfate at approximately 0.2 wt% (2000 ppm) were processed into a corrugated honeycomb structure illustrated in FIG. 5. The average surface area of the holes 31 was 16 $mm^2$/hole.

Paper-based liquid-permeable panel (Comparative Example 1): Filter paper (neutral paper) not containing aluminum sulfate was used.

Deodorizing Characteristics Experiment

A 3.2 g sample was placed in a Tedlar bag, and 1.0L of ammonia gas adjusted to a concentration of 100 ppm was introduced to thereby measure the gas concentration over time using a Kitagawa type detection tube. Ammonia gas can be detected by the human nose at a concentration of at least 1.5 ppm.

[Table 1]

(Results of Deodorizing Characteristics Experiments)

| Sample | Weight(g) | Ammonia concentration(ppm) | | | |
|---|---|---|---|---|---|
| | | After 0 minutes | After 1 minute | After 10 minutes | After 20 minutes |
| Example 1 | 3.2 | 75 | 10 | 5 | 1 or less |
| Comparative Example 1 | 3.2 | 75 | 25 | 20 | 20 |

When using neutral paper not containing aluminum sulfate as in Comparative Example 1, Table 1 illustrates that deodorization characteristics are considerably lower than Example 1, and deodorization characteristics sufficient for application are not imparted. Acidic paper that contains aluminum sulfate as in Example 1 exhibits superior ammonia deodorization characteristics and thereby enables suppression of odors.

Artificial urine having the following composition is used in Example 2, Example 3 and Comparative Example 2 and the reference example described below.

Composition of Artificial Urine

Urea 400 g
Sodium chloride 160 g

Magnesium sulfate (heptahydrate) 16g
Calcium chloride (dihydrate) 6g
Adjust above with water to make total of 20L. Add 2 g of Blue No. 1 to add color to adjusted liquid.

Reference Example

An experiment was conducted using the following method to reproduce the soiling of a room due to wetting of the feet of an animal when urine is excreted onto a plastic draining board.

Experimental Method for Soiling by Wetting of Feet

A plastic draining board having the following features was used. The plastic draining board: mesh tray (polypropylene, shape of openings: vertical 6 mm x horizontal 6 mm, horizontal crosspiece thickness: 3.5 mm, vertical crosspiece thickness 3.5 mm).
A circular cylinder having an inner diameter 60 mm was placed on the draining board and 30ml of artificial urine was dripped uniformly onto an inner side of the circular cylinder. A urethane hemisphere having a diameter of 18 mm was pressed into contact with the water drops remaining on the draining board, and the hemisphere was stamped onto filter paper (two types in accordance with JIS P3801). The diameter of the largest stain of artificial urine on the filter paper was measured. The same experiment was conducted five times per position with reference to three positions (A - C) on the draining board. The measurement results for soiling by feet wetting are shown in Table 2.

[Table 2]

| (Results of Feet Wetting Experiments) | | |
|---|---|---|
| Test position | Number of experiments | Diameter of artificial urine stain |
| A | 1 | 8 mm |
| | 2 | 9 mm |
| | 3 | 13 mm |
| | 4 | 12 mm |
| | 5 | 12 mm |
| B | 1 | 7 mm |
| | 2 | 10 mm |
| | 3 | 13 mm |
| | 4 | 10 mm |
| | 5 | 10 mm |
| C | 1 | 11.5 mm |
| | 2 | 15 mm |
| | 3 | 15 mm |
| | 4 | 16 mm |
| | 5 | 10 mm |
| Average Value | | 11.43 mm |

The experiment conducted in the reference example demonstrates that a soiling stain caused by urine having a diameter of 11.43 mm is formed on the floor surface when it is assumed that the excretion amount of urine on a single occasion is 30 ml and the animal excretes onto the plastic draining board. In this manner, it can be seen that soiling of the room occurs by reason of wetting of the feet with urine in the toilet for animals according to the reference example.
Example 2, Example 3, and Comparative Example 2
In accordance with the method described below, a liquid permeation rate experiment, a water-absorption experiment, and a feet wetting experiment (experiment to evaluate the tendency for wetting of the feet) were conducted on respectively five occasions in relation to the following paper-based liquid-permeable panel material, the non-woven

fabric liquid-permeable panel material, and a plastic draining board. The results for the liquid permeation rate experiments are shown in Table 3, the results for the water-absorption experiments are shown in Table 4 and the results for the feet wetting experiments are shown in Table 5.

Liquid-Permeable Panel Material

Paper-based Liquid-Permeable Panel (Example 2): New Rencoat is used as a base paper and an A-flute cardboard is processed into a corrugated honeycomb structure (basis weight 130 g/m$^2$) with an average surface area of the hole openings of 16 mm$^2$/hole.

Non-Woven Fabric Liquid-Permeable Panel (Example 3): A deodorizing paper using polyester fibers containing activated carbon is used as a base paper, and an A-flute cardboard is processed into a corrugated honeycomb structure (basis weight 210 g/m$^2$), the average surface area of the hole openings is 10.5 mm$^2$/hole, and includes 4.8% addition of a paraffin-based hydrophobic agent.

The plastic draining board (Comparative Example 2): mesh tray (polypropylene, shape of openings: vertical 6 mm x horizontal 6 mm, horizontal crosspiece thickness: 3.5 mm, vertical crosspiece thickness 3.5 mm).

Liquid Permeation Rate Experiment

A tray that has a premeasured weight (A) is placed below a test sample for measurement of the liquid permeation rate. The weight of artificial urine (B) is measured by measurement of approximately 30 ml of artificial urine. A circular cylinder having an inner diameter 60 mm is placed on the sample and artificial urine is dripped uniformly onto an inner side of the circular cylinder. The weight (C) of the pan containing the artificial urine is measured upon stopping of the liquid drops of artificial urine from the sample. The value for the liquid permeation rate is calculated using the formula below.

Formula for Calculation of Liquid Permeation Rate

$$\text{Liquid Permeation Rate (\%)} = (\text{weight (C)} - \text{weight (A)}) \div \text{weight (B)} \times 100$$

Water-Absorbent Characteristics Experiment

The material used for the disposable liquid-permeable panel 3 is cut into a 5 cm x 5 cm sample and the weight (A) of the sample is measured. The cut sample is immersed into artificial urine for one minite. After immersion for one minute, the sample is removed, the urine attached to the surface is wiped off, and the weight (B) of each sample is measured. The value for the water-absorption ratio is calculated using the following formula.

Water-Absorbent Characteristics Formula

$$\text{Absorption (\%/min)} = (\text{weight (B)} - \text{weight (A)}) \div \text{weight (A)} \times 100$$

Feet Wetting Experiment

A circular cylinder having an inner diameter 60 mm is placed on the sample of the disposable liquid-permeable panel 3, and 30 ml of artificial urine is dripped uniformly onto an inner side. After dripping of the artificial urine, the cylinder is removed and allowed to stand for 30 minutes. The weight (A) of 10 cm x 10 cm sheets of filter paper (two types in accordance with JIS P3801) is measured. After 30 minutes, the 10 cm x 10 cm sheets of filter paper are placed on the position of dripping of artificial urine on the material of liquid-permeable panel 3, and allowed to stand for 5 seconds. After 5 seconds, the filter paper is removed, and the weight of the filter paper (B) is measured. The experimental results for feet wetting are calculated using the following formula. Feet Wetting Calculation Formula

Feet Wetting (g) = weight (B) - weight (A).

[Table 3]

| (Results of Liquid Permeation Rate Experiments) | | | |
|---|---|---|---|
| | Example 2 | Example 3 | Comparative Example 2 |
| | Paper-based liquid-permeable panel | Non-woven fabric liquid-permeable panel | Plastic draining board |
| First Time | 95.3 % | 90.8 % | 96.6 % |
| Second Time | 95.9 % | 93.1 % | 99.6 % |
| Third Time | 95.2 % | 93.2 % | 96.0 % |
| Fourth Time | 95.2 % | 93.8 % | 96.1 % |
| Fifth Time | 93.0 % | 93.2 | 95.7 % |
| Average Value | 94.9 % | 92.8 % | 96.8 % |

[Table 4]

| (Results for Water-Absorption Experiments) | | | |
|---|---|---|---|
| | Example 2 | Example 3 | Comparative Example 2 |
| | Paper-based liquid-permeable panel | Non-woven fabric liquid-permeable panel | Plastic draining board |
| First Time | 39.7 %/ min | 29.2 %/ min | 0.0% / min |
| Second Time | 24.2 %/ min | 36.0 %/ min | 0.0% / min |
| Third Time | 28.4 %/ min | 38.7 %/ min | 0.0% / min |
| Fourth Time | 31.5 %/ min | 36.9 %/ min | 0.0% / min |
| Fifth Time | 17.6 %/ min | 41.6 %/ min | 0.0% / min |
| Average value | 28.3 %/ min | 36.5 %/ min | 0.0% / min |

[Table 5]

| (Results of Feet Wetting Experiments) | | | |
|---|---|---|---|
| | Example 2 | Example 3 | Comparative Example 2 |
| | Paper-based liquid-permeable panel | Non-woven fabric liqud-permeable panel | Plastic draining board |
| First Time | 0.00 % | 0.01 % | 0.13 % |
| Second Time | 0.01 % | 0.01 % | 0.16 % |
| Third Time | 0.00 % | 0.11 % | 0.11 % |
| Fourth Time | 0.01 % | 0.03 % | 0.17 % |
| Fifth Time | 0.02 % | 0.00 % | 0.11 % |
| Average Value | 0.01 % | 0.03 % | 0.14 % |

Comparative Example 2 as illustrated in Table 3 and Table 4 demonstrates that the plastic draining board enables superior passage of artificial urine but absorbs none of artificial urine that failed to permeate. Consequently, as

shown by Table 5, the feet wetting experiment demonstrates the result that a large amount of residual artificial urine on the draining board is attached to the filter paper. Therefore, it can be seen that there is no improvement in preventing wetting of the feet of an animal in a toilet for animals in which excretion is performed on a plastic draining board.

On the other hand, it can be seen that the liquid-permeable panel 3 exhibits excellent liquid permeation characteristics in Example 2 and Example 3 that use a liquid-permeable panel 3 formed in a corrugated honeycomb shape made of paper or a non-woven fabric. Consequently, use of the liquid-permeable panel 3 of Example 2 and Example 3 enables permeation of the liquid-permeable panel 3 by a large amount of artificial urine, and the slight amount of artificial urine that remains on the liquid-permeable panel 3 is absorbed by the liquid-permeable panel 3. Therefore, it can be seen that almost no artificial urine is attached to the filter paper as shown by Table 5 in the feet wetting experiment.

## Claims

**1.** A disposable liquid-permeable panel for a toilet for animals having water-absorbent characteristics and liquid-permeable characteristics, comprising
paper including aluminum sulfate.

**2.** The liquid-permeable panel according to claim 1,
wherein the paper is acidic paper containing a sizing agent and aluminum sulfate.

**3.** The liquid-permeable panel according to claim 1 or 2,
wherein the liquid-permeable panel has a plurality of holes that penetrate in a thickness direction of the liquid-permeable panel, and is a corrugated cardboard in which liquids go through the plurality of holes, passing through the thickness direction of the liquid-permeable panel.

**4.** The liquid-permeable panel according to any one of claims 1 to 3,
wherein the content amount of aluminum sulfate in the liquid-permeable panel as an aluminum-sulfate is at least 0.05 wt% and no greater than 0.3 wt%.

**5.** A toilet system for animals comprising:

an excrement receptacle that includes an excretion containment section; and
the liquid-permeable panel according to any one of claims 1 to 4 that is disposed detachably in an upper space of the excretion containment section.

FIG. 1

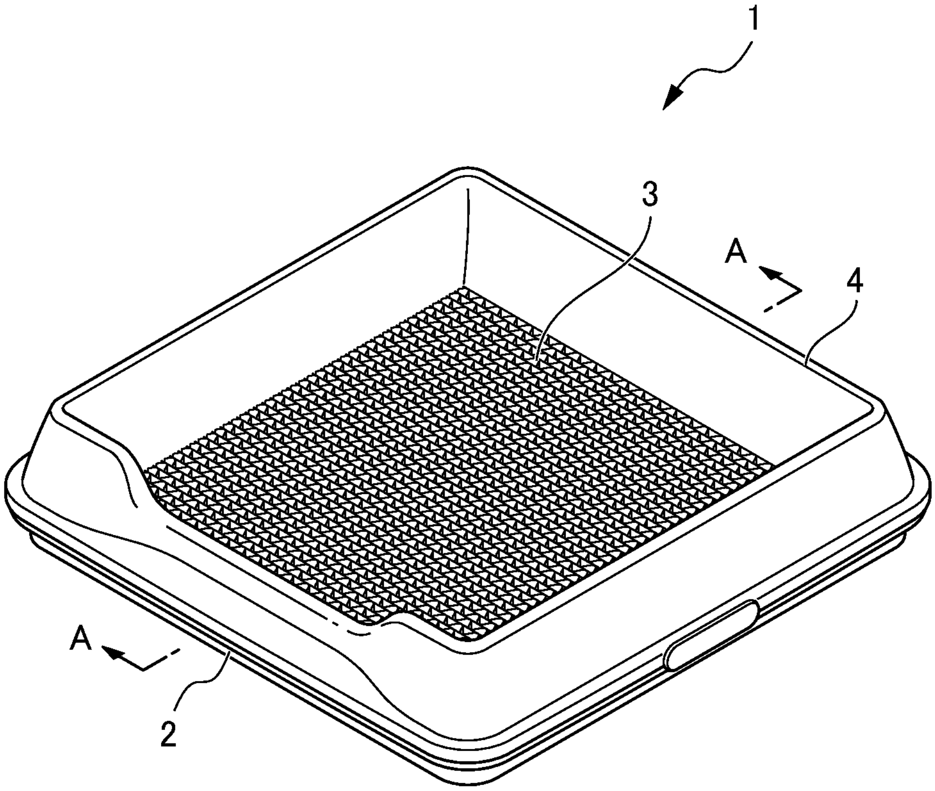

FIG. 2

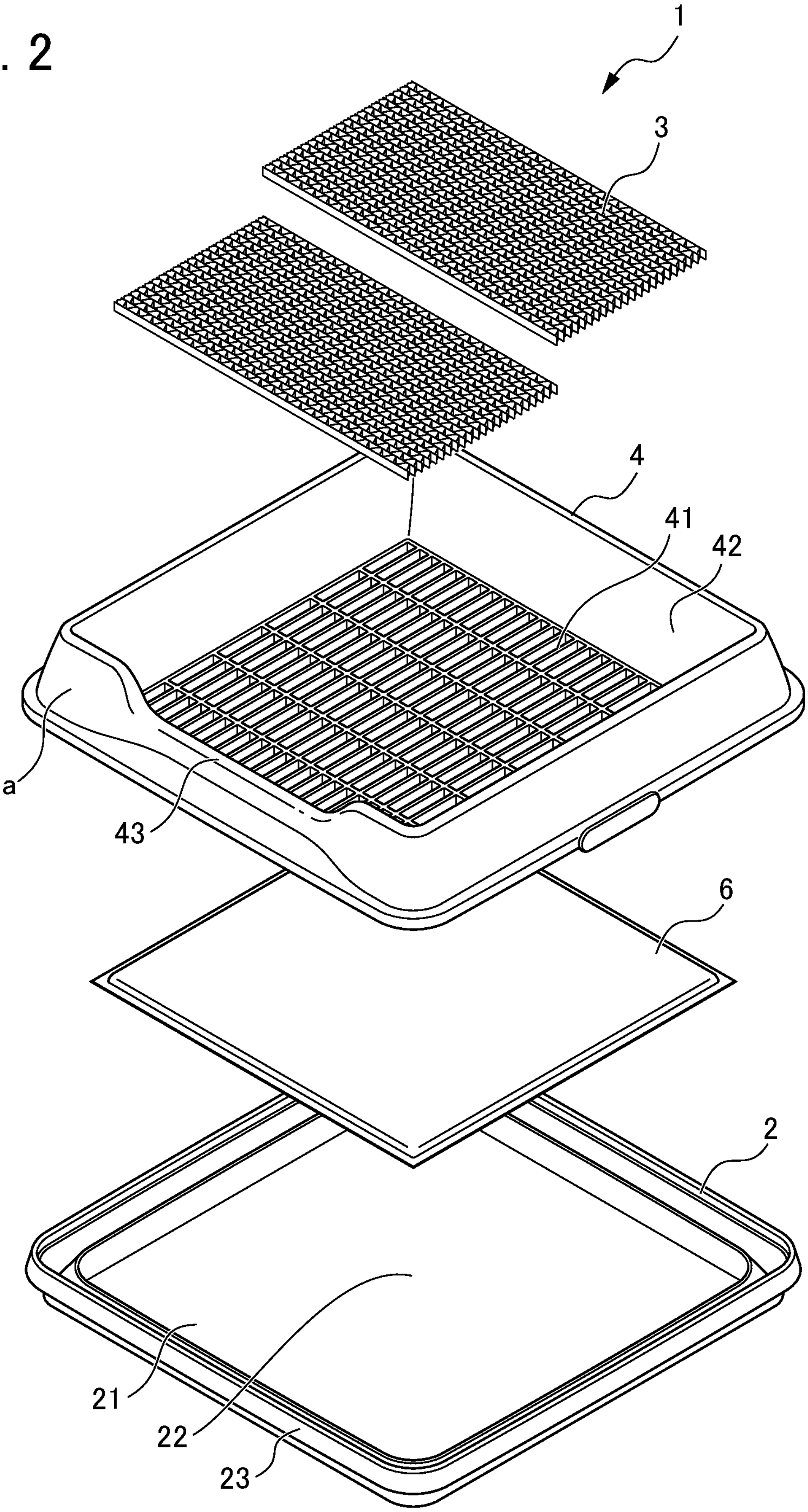

FIG. 3

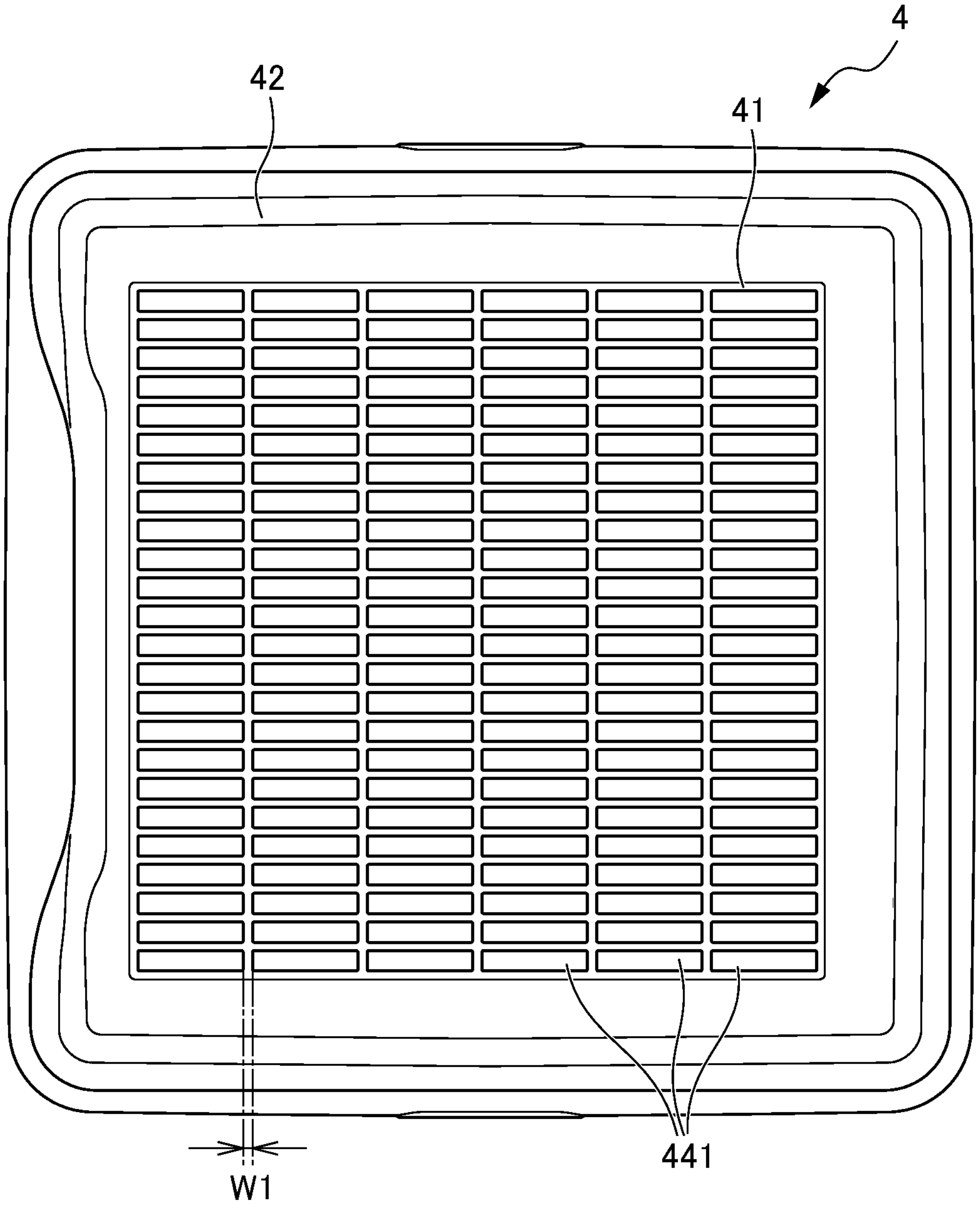

FIG. 4

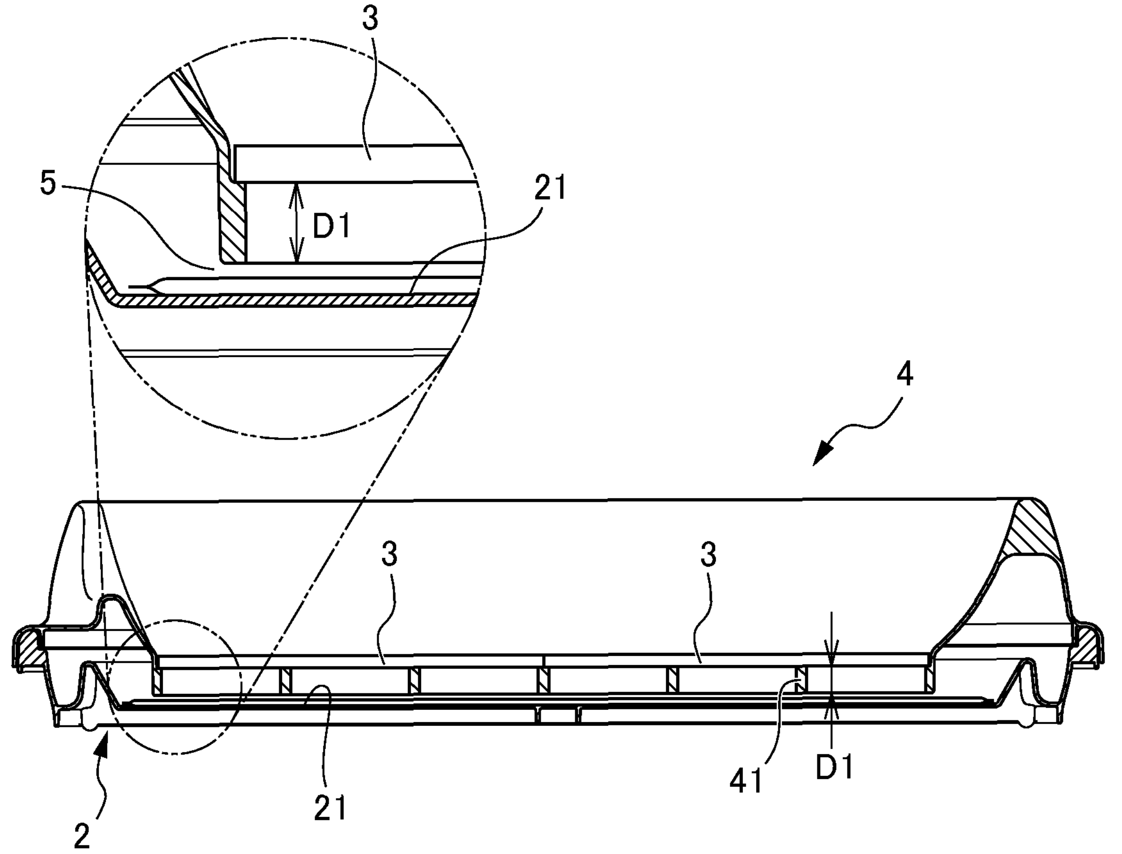

FIG. 5

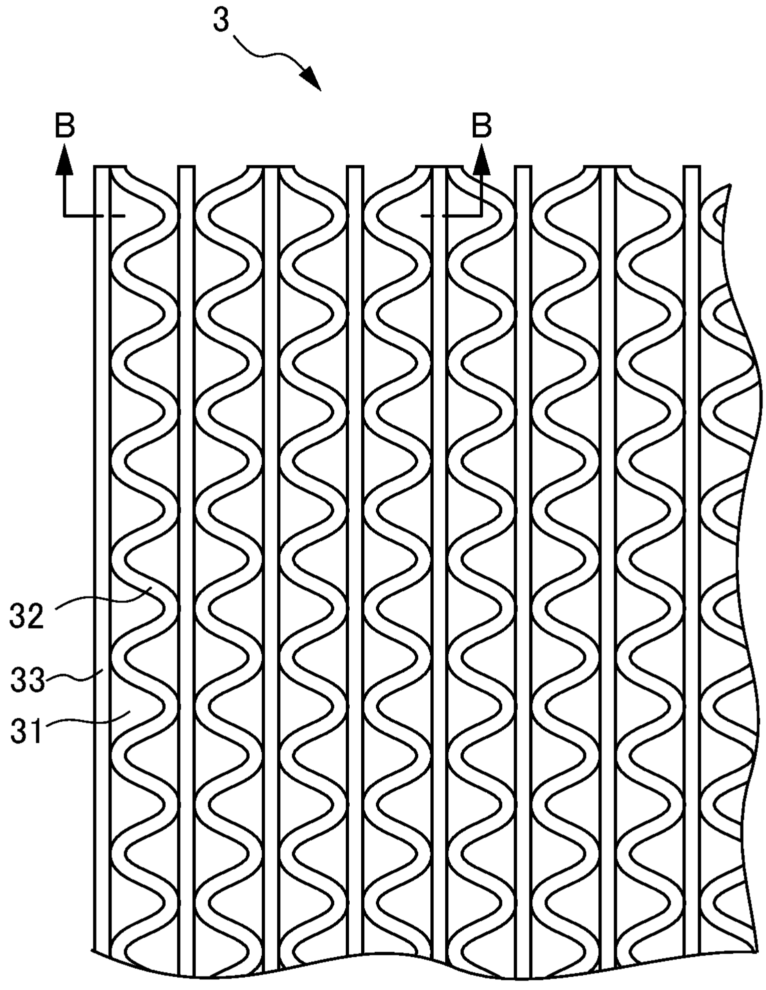

FIG. 6

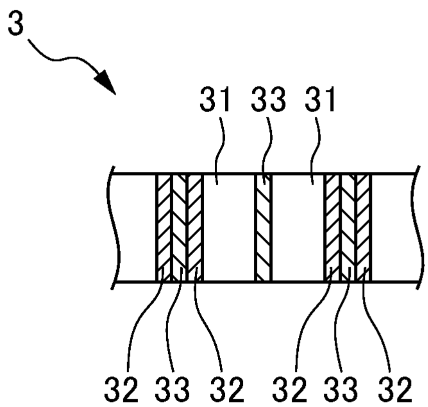

**INTERNATIONAL SEARCH REPORT**

International application No.
PCT/JP2011/064547

A. CLASSIFICATION OF SUBJECT MATTER
*A01K1/015*(2006.01)i, *A01K1/01*(2006.01)i, *A01K23/00*(2006.01)i

According to International Patent Classification (IPC) or to both national classification and IPC

B. FIELDS SEARCHED

Minimum documentation searched (classification system followed by classification symbols)
A01K1/015, A01K1/01, A01K23/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-44 A (Kazuhiko SAWA), 05 January 2006 (05.01.2006), entire text; fig. 1 to 5 (Family: none) | 1-5 |
| A | JP 2006-238780 A (Kabushiki Kaisha Oshima Design), 14 September 2006 (14.09.2006), entire text; fig. 1 to 5 (Family: none) | 1-5 |
| A | JP 2007-202570 A (Kabushiki Kaisha Yamahisa), 16 August 2007 (16.08.2007), entire text; fig. 1 to 2 (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 July, 2011 (27.07.11) | Date of mailing of the international search report<br>09 August, 2011 (09.08.11) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/064547

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-360093 A (Kunimine Industries Co., Ltd.), 17 December 2002 (17.12.2002), claim 8; paragraph [0001] (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005021071 A